(19) **Europäisches Patentamt / European Patent Office / Office européen des brevets**

(11) **EP 3 384 629 B1**

(12) # EUROPEAN PATENT SPECIFICATION

(45) Date of publication and mention
of the grant of the patent:
**04.05.2022 Bulletin 2022/18**

(21) Application number: **16816513.2**

(22) Date of filing: **30.11.2016**

(51) International Patent Classification (IPC):
***H04L 9/32*** *(2006.01)*

(52) Cooperative Patent Classification (CPC):
**H04L 9/3247; H04L 9/3239;** H04L 2209/38;
H04L 2209/805

(86) International application number:
**PCT/US2016/064209**

(87) International publication number:
**WO 2017/095920 (08.06.2017 Gazette 2017/23)**

(54) **SYSTEM AND METHOD FOR TAMPER-RESISTANT DEVICE USAGE METERING**

SYSTEM UND VERFAHREN ZUR NUTZUNGSMESSUNG EINER MANIPULATIONSSICHEREN
VORRICHTUNG

SYSTÈME ET PROCÉDÉ POUR UNE MESURE D'UTILISATION DE DISPOSITIF INVIOLABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.12.2015 US 201562262122 P**

(43) Date of publication of application:
**10.10.2018 Bulletin 2018/41**

(73) Proprietor: **PCMS Holdings, Inc.**
**Wilmington, DE 19809 (US)**

(72) Inventor: **JUELS, Ari**
**New York, New York 10001 (US)**

(74) Representative: **Heinze, Ekkehard et al**
**Meissner Bolte Patentanwälte**
**Rechtsanwälte Partnerschaft mbB**
**Widenmayerstraße 47**
**80538 München (DE)**

(56) References cited:
**US-A1- 2015 099 510**

- **TONG-LEE LIM ET AL: "Secure RFID Identification and Authentication with Triggered Hash Chain Variants", PARALLEL AND DISTRIBUTED SYSTEMS, 2008. ICPADS '08. 14TH IEEE INTERNATIONAL CONFERENCE ON, IEEE, PISCATAWAY, NJ, USA, 8 December 2008 (2008-12-08), pages 583-590, XP031378859, ISBN: 978-0-7695-3434-3**
- **LUIS F G SARMENTA ET AL: "Virtual monotonic counters and count-limited objects using a TPM without a trusted OS", SCALABLE TRUSTED COMPUTING, ACM, 2 PENN PLAZA, SUITE 701 NEW YORK NY 10121-0701 USA, 3 November 2006 (2006-11-03), pages 27-42, XP058290853, DOI: 10.1145/1179474.1179485 ISBN: 978-1-59593-548-9**
- **MANEL GUERRERO ZAPATA ET AL: "SECURING AD HOC ROUTING PROTOCOLS", WISE. PROCEEDINGS OF THE 2002 ACM WORKSHOP ON WIRELESS SECURITY. ATLANTA, GA, SEPT. 28, 2002; [PROCEEDINGS OF THE ACM WORKSHOP ON WIRELESS SECURITY], NEW YORK, NY : ACM, US, 28 September 2002 (2002-09-28), pages 1-10, XP001047058, ISBN: 978-1-58113-585-5 cited in the application**

**EP 3 384 629 B1**

• **DAVE LEVIN JOHN R DOUCEUR UNIVERSITY OF MARYLAND MICROSOFT RESEARCH MICROSOFT RESEARCH MICROSOFT RESEARCH: "TrInc: Small Trusted Hardware for Large Distributed Systems", USENIX,, 2 April 2009 (2009-04-02), pages 1-14, XP061010708, [retrieved on 2009-04-02]**

## Description

## CROSS-REFERENCE TO RELATED APPLICATION

The present application claims priority to U.S. Provisional Application Serial No. 62/262,122 filed December 2, 2015, entitled "SYSTEM AND METHOD FOR TAMPER-RESISTANT DEVICE USAGE METERING."

## BACKGROUND

Accurate tracking of device usage or lifecycle state can be safety-critical, as for medical devices, aircraft parts, and so forth. Without special-purpose hardware, however, on-device usage data is vulnerable to tampering, and specifically to attacks that suppress evidence of device wear to deceive auditors or purchasers. The problem is specifically relevant to the pervasive case of power-constrained embedded wireless devices that lack the ability to monitor and update securely their own lifecycle state or the state of devices to which they are attached.

Many devices have manufacturer-prescribed limits of use which, if exceeded, can pose critical safety hazards. Medical devices are a prime example: use exceeding their effective lifetimes can jeopardize patient safety. Thus accurate tracking of these devices' lifecycle state is of paramount importance.

An increasingly common approach to this problem is to record lifecycle state data in a self-contained wireless embedded device, such as a near field communication (NFC) or radio-frequency identification (RFID) tag, or a similar piece of local memory that is attached to or embedded within a given device. Such RFID tags are available from, for example, Vizinex. Such tags are useable in environments with poor internet connectivity, require no on-board source of power, and permit easy transfer of data across stakeholders in complex supply chains. When used with medical devices, NFC / RFID tags additionally facilitate compliance with the U.S. FDA Unique Device Initiative (UDI) system described in FDA and HHS Final Rule "Unique Device Identification System," 78 FR 58785 (Sept. 24, 2013).

Data stored in standard NFC / RFID tags is vulnerable to tampering by any entity with the ability to modify the data. In many settings, to reduce the power and hardware required for the device, an external reader will perform tag-data updates, rather than the device itself. This reader can be controlled or manipulated by the entity in possession of the device. Even in the case where the tag is password-protected or has other access controls, this entity can abuse its access rights to the tag and incorrectly manipulate lifecycle data.

Thus, lack of integrity protection on medical-device lifecycle state data opens up a serious risk of "lifecycle-extension attacks," in which an unscrupulous entity reduces the amount of usage (e.g., patient "touches") recorded for the device in order to deceive auditors or purchasers. Existing approaches to lifecycle state recording, which often rely on standard tags, offer little or no protection against such attacks. Most existing solutions either provide no effective protection against lifecycle-extension and related attacks or require special-purpose hardware beyond the desired cost and capabilities of common devices, e.g., simple medical devices, aircraft parts, etc.

Hardware-enforced monotonic counters as available in, e.g., Trusted Platform Modules (TPM), can mitigate the risk of such attacks. These devices rely on special-purpose, tamper-resistant hardware, however, and are therefore expensive. Moreover, the types of inexpensive devices, e.g., NFC / RFID devices, favored for key applications such as medical device lifecycle management do not offer hardware support for monotonic counters.

Hash chains have seen use in a variety of applications, including user authentication in the Lamport authentication scheme, described in Lamport, "Password Authentication with Insecure Communication", Communications of the ACM vol. 24, no.11, pp 770-772, 1981, which serves as the basis for the S/KEY system, described in N. Haller, "The S/KEY one-time password system," RFC 1760 (1995). Hash chains have also been used for privacy-preserving RFID authentication. One such scheme is that described in Ohkubo et al., "Cryptographic approach to 'privacy-friendly' tags." RFID privacy workshop. Vol. 82. 2003. Other techniques are surveyed in Syamsuddin et al., "A survey of RFID authentication protocols based on hash-chain method," in Convergence and Hybrid Information Technology, 2008, ICCIT '08. Third International Conference on (Vol. 2, pp. 559-564). IEEE. These schemes involve the release of a hash value by an RFID tag for authentication.

One-way functions, and specifically hash chains, have been used in the construction of forward-secure cryptographic schemes. These are schemes in which an adversary that compromises a device (or entity) at a given time is unable to learn previously used secrets of that device. Previous schemes involving hash chains for forward-secure systems have used such chains to derive cryptographic keys used for subsidiary operations, e.g., encryption and message authentication, for use in, e.g., securing audit logs, as described in Schneier, B., & Kelsey, J. (1999), "Secure audit logs to support computer forensics," ACM Transactions on Information and System Security (TISSEC), 2(2), 159-176. A survey of such schemes is provided in Itkis, G. (2004), "Forward security, adaptive cryptography: Time evolution." Such schemes, however, do not provide adequate solutions for construction of counters for local storage within a device.

One known system, described in Zapata, M. G., & Asokan, N, (2002, September), "Securing ad hoc routing protocols," in Proceedings of the 1st ACM workshop on Wireless security (pp. 1-10), ACM, uses a hash chain for authentication of hops in an ad hoc network in a security enhancement to the IETF Ad-hoc On-demand Distance Vector (AODV) routing protocol. Subsequent variants adopt a similar approach, as described in the survey of Von Mulert et al., (2012), "Security threats and solutions in MANETs: A case study using AODV and SAODV," Journal of network and computer applications, 35(4), 1249-1259. The Zapata-Asokan construction implements a monotonic counter cryptographically secured via a hash chain. This counter is manipulated in a data packet routed on a network. XP031378859 discloses a secure RFID identification and authentication with triggered hash chain variants.

## SUMMARY

The aforementioned problem is solved by the features of the independent claims. Further embodiments are the subject-matter of the dependent claims. Tamper-resistant systems and methods are proposed herein for monitoring and auditing device usage by means of a cryptographically secured monotonic counter. This counter may reside in a small amount of untrusted storage, and is efficient both to read and verify. Systems and methods disclosed herein are suitable for resource-constrained storage devices, such as RFID tags. Some embodiments additionally include systems and methods for post hoc auditing of appropriate counter incrementing.

One exemplary method is performed using a tag reader, such as a wireless RFID tag reader, to increment a counter in a tag memory associated with a limited-use device, part, or other kind of product. The reader reads (e.g. wirelessly reads) an initial verification value from the tag memory and applies a hash function to the initial verification value to obtain a hashed verification value. In response to at least one use of the limited-use product, the reader replaces (e.g. wirelessly replaces) the initial verification value with the hashed verification value in the tag memory. In some embodiments, the reader also reads an initial counter value from the memory of the tag, increments the initial counter value to obtain an incremented counter value, and in response to the use of the limited-use product, replaces (e.g. wirelessly replaces) the initial counter value with the incremented counter value in the tag memory.

In some embodiments, the tag reader or other component operates to validate the contents of the tag memory. In one such embodiment, an initial counter value and a hash chain head value are read from the tag memory. A hash function is repeatedly applied to the verification value to obtain a repeatedly-hashed verification value, and the repeatedly-hashed verification value is compared to the hash chain head value to validate the verification value. The number of times to apply the hash function to obtain the repeatedly-hashed verification value may be determined based on the initial counter value. (For example, where the counter value is s the hash function may be applied a number of times determined by $n$ - s, where $n$ is a predetermined positive integer.)

The tag reader or other component may issue an alert in response to a determination that the verification value is not valid. In a further verification method, the tag reader may read an identifier and a digital signature from the tag memory and may validate the hash chain head value based on the digital signature and the identifier. An alert may be issued in response to a determination that the verification value is not valid.

In some embodiments, the tag memory includes a plurality of counters including a plurality of verification values, each counter having a different associated coefficient, wherein incrementing the counter further comprises incrementing at least two of the plurality of counters.

An apparatus for updating a counter is provided in some embodiments. The apparatus may include a tag interface (e.g. a wireless interface such as RFID) operative to read an initial verification value from a tag memory. The apparatus may further include logic for applying a hash function to the initial verification value to obtain a hashed verification value. The wireless tag interface may also be operative to replace the initial verification value with the hashed verification value in the tag memory.

In some embodiments, an RFID tag is provided, where the RFID tag includes a non-transitory wirelessly-readable memory, and the memory stores values that include a counter value, a verification value, and a digitally-signed hash chain head value, wherein the hash chain head value is equal to the outcome of repeatedly applying a predetermined hash function to the verification value a number of times determined by the counter value.

In exemplary embodiments, the counter value stored on a tag is not digitally signed. In exemplary embodiments, the counter value stored on a tag is not digitally encrypted.

Some exemplary embodiments operate to update a counter stored in a memory that includes a plurality of sub-counters. One such method operates as follows. Based on an input number by which the counter is to be incremented, a first number is determined by which to increment a first sub-counter and a second number by which to increment a second sub-counter. A first initial verification value associated with the first sub-counter and a second initial verification value associated with a second sub-counter are read from the memory. A hash function is applied to the first initial verification value the first number of times to obtain a first hashed verification value, and the first initial verification value is replaced with the first hashed verification value in the memory. The hash function is also applied to the second initial verification value the second number of times to obtain a second hashed verification value, and the second initial verification value is replaced with the second hashed verification value in the memory. This method may be extended to any number of sub-counters.

In some embodiments, tag data is provided to an auditor. For example, in one such method, at least a first verification value and first counter value are read from a counter tag. After reading the first verification value and counter value, the counter tag is updated at least once, e.g. using one or more of the methods summarized above. After updating the counter tag at least once, at least a second verification value and counter value is read from the counter tag. The first and second verification values and counter values are provided to an auditor.

In some embodiments, a secure counter verification method is performed. One such method includes reading a counter value from a tag memory, reading a verification value from the tag memory, and reading a digital signature from the tag memory. A hash function is repeatedly applied to the verification value to obtain a hashed verification value, with the number of times the hash function is applied being determined by the counter vale. A determination is made of whether the digital signature is a valid digital signature of data including the hashed verification value.

In an exemplary embodiment of a secure counter, the counter includes a non-transitory data storage medium having stored thereon a plurality of sub-counter data sets, where each sub-counter data set includes: a counter value $s$; a verification value; a hash chain head value; and an electronic signature of at least the hash chain head value. The hash chain head value is equal the result of applying a predetermined hash function to the verification value a number of times determined by $n - s$, where $n$ is a predetermined positive integer.

In another exemplary embodiment of a secure counter, the counter includes a non-transitory data storage medium having stored thereon a verification value, a hash chain head value, and an electronic signature of at least the hash chain head value. The hash chain head value is equal the result of applying a predetermined hash function to the verification value a plurality of times. The non-transitory data storage medium may be a storage medium of an RFID tag or an NFC tag.

In a further exemplary embodiment of a secure counter, the secure counter includes a non-transitory data storage medium having stored thereon a plurality of sub-counter data sets, where each sub-counter data set includes a verification value, a hash chain head value, and an electronic signature of at least the hash chain head value, where the hash chain head value is equal the result of applying a predetermined hash function to the verification value a plurality of times.

In an exemplary embodiment, a secure counter update method for is provided updating a counter by an increment value. In the exemplary method, the increment value is decomposed into a plurality of component values, where each component value is associated with a sub-counter. For each sub-counter, a method is performed that includes steps of: (i) reading an initial verification value for the sub-counter stored on a tag memory; (ii) applying a hash function a number of times on the verification value to obtain a hashed verification value, wherein the number of times is determined by the component value associated with the sub-counter; and (iii) replacing the initial verification value for the sub-counter with the hashed verification value in the tag memory. The method may also include, for each sub-counter, steps of reading an initial counter value for the sub-counter, adding the component value to the initial counter value for the sub-counter to generate an incremented counter value, and replacing the initial counter value for the sub-counter with the incremented counter value.

In some embodiments, a method is performed for preventing usage counter rollback. An auditor or other entity receives (i) a first reported usage count and an associated first hash value for a device and (ii) a second reported usage count and an associated second hash value for the device. An expected hash value is determined for the device for the second reported usage count. The expected hash value is produced through a repeated hash operation performed on the first hash value a number of times, where the number of times is equal to the second usage count minus the first reported usage count. In response to a determination that the expected hash value does not match the second reported hash value associated with the second reported usage count, an alert of usage counter fraud is issued.

Exemplary systems and methods described herein protect against a dangerous form of lifecycle-extension attack, in which one entity rolls back counter changes made by a previous one. Some embodiments are implemented without need for special-purpose security hardware and with use of minimal storage and computational overhead.

## BRIEF DESCRIPTION OF THE DRAWINGS

FIG. 1 is a schematic illustration of a hash chain used in an exemplary embodiment.

FIGs. 2A-2B illustrate an auditing process according to an exemplary embodiment.

FIG. 3 schematically illustrates an architecture of a system for reading, updating, and auditing secure counter values stored in a tag memory.

FIG. 4 is a flow chart illustrating steps in the initialization, use, and auditing of a secure counter.

FIG. 5 is a flow chart illustrating steps in the updating and reading of a secure counter having a plurality of sub-counters according to an embodiment.

FIG. 6 illustrates exemplary contents of a tag memory in an embodiment using a plurality of sub-counters.

FIG. 7 illustrates an exemplary wireless transmit/receive unit (WTRU) that may be employed as a checkpoint device or tag memory device in some embodiments.

FIG. 8 illustrates an exemplary network entity that may be employed as a trusted entity, or an auditor in some embodiments.

## DETAILED DESCRIPTION

Described herein are systems and methods for constructing a cryptographically secure, offline, monotonic counter that can be implemented using a small amount of memory, e.g., in a RFID tag attached to a device, component, or container. This counter can represent the lifecycle state of the device or component, e.g., the aggregate number of uses of a medical device.

In an exemplary embodiment, the counter is constructed based on a hash chain $x[0], .., x[n]$, computed using a cryptographic hash function $h$ (e.g., SHA-256). The value $n$ is selected to be greater than any expected value $s$ of the counter. In some embodiments, the value $n$ may be a predetermined value known to all entities. In other embodiments, the value $n$ may be stored in a device memory.

In an exemplary hash chain $x[n]$, the value of a particular entry $x[j]$ in that hash chain may be given by $x[j] = h(x[j-1])$ for $j > 0$. Upon initialization of the counter, the head of the chain $x[n]$ is stored in the device memory along with a digital signature on $x[n]$ and a unique device identifier $id$. Together, these values form a check value $ch$ that permits verification of the validity of a current counter value. At any given time, also stored in the tag is the current value $s$ of the counter along with a verification value $v = x[s]$, which is an entry in the hash chain that may be used to verify the correctness of counter value $s$.

In an exemplary embodiment, the counter is incremented by incrementing $s$ and replacing $v$ with a hash of $v$, i.e. with $h(v)$ for the hash function $h$. The correctness of the counter may be verified by checking that $ch$ represents a correct digital signature on $h^{(n-j)}(v)$ and the device identifier $id$. Given the triple $(ch, s, v)$ alone, it is infeasible to decrement the counter, as this would require inversion of the hash function.

In an exemplary embodiment, entities handling the device store checkpoint values representing the state $(s, v)$ of the device at significant points in its use, e.g., upon receipt and release of the device in a chain of custody. These checkpoint values can be used by an auditor after the fact to verify appropriate counter manipulation by the entities handling the device.

The term "tag" is used herein to refer to a non-transitory storage medium used to store lifecycle-state data for a given device. In some embodiments, the tag is an RFID tag or similar device. In other embodiments, a tag is a region of on-device memory in a wireless embedded device. The wireless embedded device may lack the capability of internally monitoring and securely updating a record of its own lifecycle state.

The symbol $id$ is used herein to refer to a globally or locally unique device identifier for the device, e.g., a serial number present in read-only memory. The symbol $h$ is used herein to represent a cryptographic (one-way) hash function, such as SHA-256. The symbol k is used herein to represent a security parameter.

Exemplary systems and methods employ modules, such as software functions, referred to herein as KeyGen, Sig, and Ver for signature verification. The operations performed by those modules are described in greater detail below.

Consider an embodiment in which a trustworthy entity $T$ holds a private / public key pair $(sk, pk)$. This key pair may be generated using the function KeyGen($k$). The public $key\ pk$ is presumed to be known to all entities in the system. It may be predistributed, authenticated via a certificate carried in a device tag, etc.

An exemplary embodiment of a secure counter system employs modules, which may be software-implemented functions, referred to herein as TagInit, TagVer, TagUpdate, TagLog, and TagAudit. These modules are described in greater detail below.

**TagInit(*id, sk*).** A tag initiation method may be performed by the function TagInit($id$, $sk$) executed by trusted entity $T$. The function TagInit initializes a tag with counter value 0. The function TagInit outputs the triple $(s, v, ch)$, where $s$ is a counter value, which is initially set to zero; $v$ is the first entry $x[0]$ in the hash chain, and $ch$ is a check value. In an exemplary embodiment, the first entry in the hash chain is generated as a $k$-bit random number r$\{0,1\}^k$, where r denotes uniformly random selection from a set. In an exemplary embodiment, the check value $ch$ includes the head $x[n]$ of the hash table, the identifier $id$ of the tag, and a digital signature $\Sigma$ on the head $x[n]$ and the identifier $id$. Specifically,

$$ch = (x[n], id, \Sigma).$$

In some embodiments, the head $x[n]$ of the hash chain is not included in the check value $ch$, although the inclusion of $x[n]$ can promote computational efficiency. To generate the head $x[n]$ of the hash chain, the trusted entity $T$ applies the hash function $h$ to the first entry $x[0]$ in the hash chain in an iterative fashion, such that

$$x[n] = h^{(n)}(x[0]).$$

To generate the digital signature $\Sigma$, the operation $\text{Sig}_{sk}$ is performed on $x[n]$ and $id$, using one of various available digital signature algorithms, such that

$$\Sigma = \text{Sig}_{sk}(x[n], id).$$

The digital signature may be generated using the private key of a particular entity, such as a private key of a manufacturer. Thus, different tags with different identifiers *id* may include signatures generated using the same private key.

**TagVer(*id, pk, (s, v, ch)*).** In some embodiments, a method of verifying the authenticity of a counter is performed using a verification module to perform the function TagVer(*id, pk, (s, v, ch)*). This function verifies the correctness of the state (counter value) in a tag. TagVer operates to confirm whether *v=x[s]* for tag value s and verification value *v.* That is, TagVer confirms whether *v* is the s$^{th}$ entry in the hash chain (keeping in mind that the hash chain may include a 'zeroth' entry). In some embodiments, this is performed as follows. The function TagVer computes a value $\tilde{x}[n]$ by iteratively applying the hash function to the verification value *v* a number of times that would be sufficient to reach the head of the hash chain, specifically

$$\tilde{x}[n] = h^{(n-s)}(v) \, .$$

Once $\tilde{x}[n]$ has been calculated, the exemplary function TagVer verifies whether the signature $\Sigma$ is a valid signature on ($\tilde{x}[n]$ , *id).* For example, TagVer may output true iff $\text{Ver}_{pk}[(\tilde{x}[n] , id), \Sigma]$ = true; otherwise it outputs false. If $\tilde{x}[n]$ is not equal to *x[n],* or if the *id* read from the tag is not the same as the *id* used to create the digital signature $\Sigma$ during the initiation process, then signature verification will fail. This provides an indication that the counter may have been tampered with (e.g., through an attempt to roll back the counter). In some embodiments, failure of tag verification cause an alert to be issued. For example, a device performing the TagVer function may issue an audible alert or may display a warning indicating that tag verification has failed. Failure of tag verification may also cause the device performing the TagVer function to report the failure and associated information (e.g. the values of *s, v,* and *ch*) to another entity, such as an auditor. Such report may be made synchronously (e.g. over a wireless communication interface) or asynchronously (e.g. stored for later downloading and/or transmission to the other entity).

**TagUpdate(*c, (s, v, ch)*).** In an exemplary method, a function TagUpdate(*c, (s, v, ch)*) is performed to increment a tag's counter by a value *c.* The function operates to output an updated state (*s ',v'*) to replace (*s,v*), where *s* = *s* + *c* and *v' = h^(c)(v).*

**TagLog(*(s, v, ch)*).** The function TagLog((*s, v, ch*)) enables a tag-handling entity to provide evidence to an auditor of its having advanced the counter by *c.* Described herein is an unauthenticated embodiment. As will be apparent to those skilled in the art, the source of outputs can be authenticated to an auditor. Various cryptographic methods can be used, of course, to authenticate checkpoint values. In an exemplary embodiment, TagLog outputs a checkpoint value *d* = (*s, v, ch*). A device handling entity computes respective checkpoint values $d_0$ and $d_1$ when it obtains and relinquishes the device.

**TagAudit($\{(d_0^{(i)}, d_1^{(i)})\}_{i=1 \text{ to } m}$).** A function TagAudit($\{(d_0^{(i)}, d_1^{(i)})\}_{i=1 \text{ to } m}$) may be used to audit checkpoint devices. Given checkpoint pair ($d_0^{(i)}$) = ($s_0^{(i)}$, $v_0^{(i)}$, $ch^{(i)}$); $d_1^{(i)} = (s_1^{(i)}, v_1^{(i)}, ch^{(i)})$) from the *i*$^{th}$ device handling entity in a sequence of *m* such entities, TagAudit verifies that $s_1^{(i)} = s_0^{(i+1)}$ for all *i* in [1,*m*-1] and that corresponding v values are valid. If so, entity *i* is deemed to have advanced the counter by $s_1^{(i)} - s_0^{(i)}$. Otherwise, one or more entities may be identified as having reported false checkpoint values.

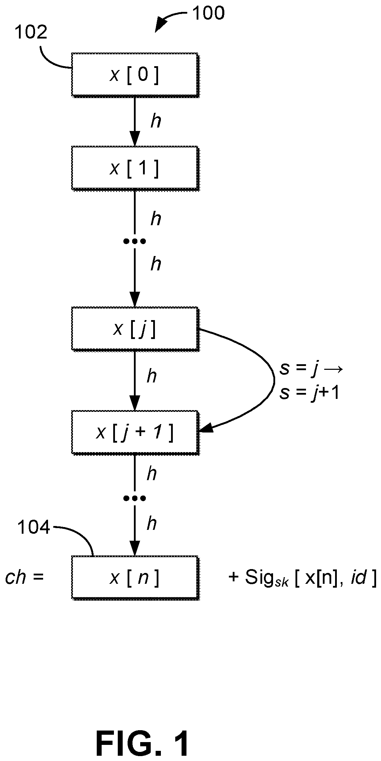

FIG. 1 illustrates the structure of a hash chain 100 used in exemplary embodiments. For a counter value of s, a tag memory stores the value s along with a verification value v. On initialization, the verification value v is selected as a random or pseudo-random number. This value is used (at reference number 102) as the first entry x[0] in the hash chain. On initialization, the last value *x[n]* of the hash chain (at reference number 104) is calculated by repeated application of the hash function *h* a total of *n* times, with x[*j*+1]=*h*(x[j]). For any counter value s stored in the tag, the verification value v should be equal to x[s]. Verification can be performed by applying the hash function *h* repeatedly to the verification value *v* repeatedly (specifically n-s times) to confirm that the result is equal to x[0].

With the use of a cryptographic hash functions, it is computationally infeasible for an entity with access to the current device state alone to decrement the counter of the device. The TagVer function will only validate manipulation of the counter resulting from incrementing (or no change).

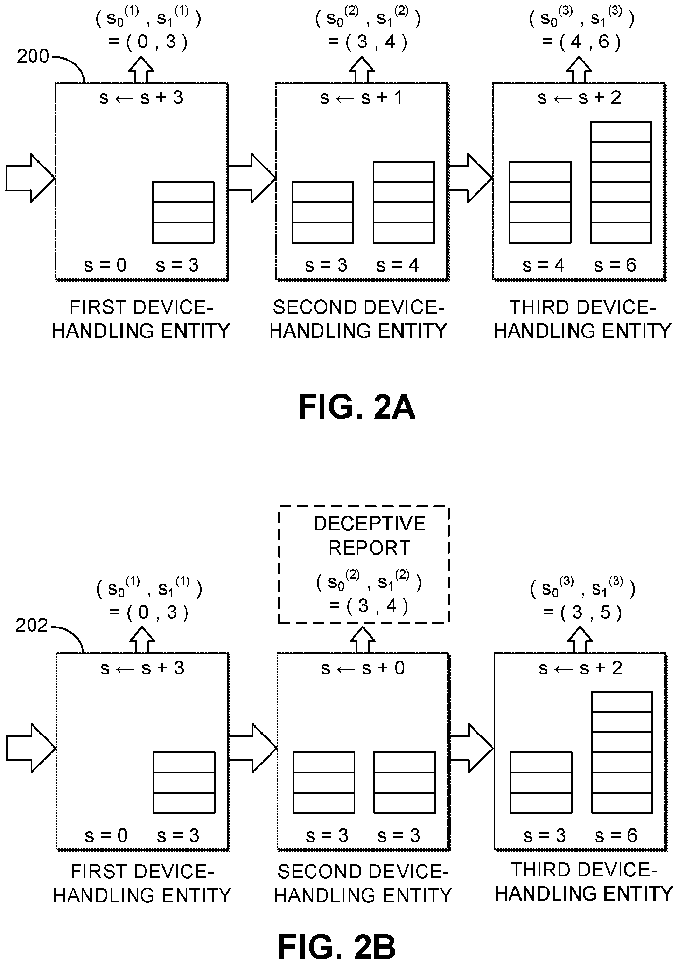

In cases where a sequence of checkpoint entities is preceded and followed by a pair of accurately-reporting checkpoint entities, the TagLog function may be used in a method for detection of misreporting of aggregate counter manipulation. One limitation is that counter changes by the *m*$^{th}$ entity call for accurate reporting of $d_1^{(m)}$. In preferred implementations, auditing is performed when the device is obtained by a trustworthy entity. Examples of valid and invalid checkpointing are shown in FIGs. 2A-2B. FIG. 2A illustrates a case in which only valid checkpoint values are provided. A first device-handling entity begins use of the tagged device 200 with the counter value s=0. With the completion of three uses, the first device-handling entity has replaced the initial value of s (namely 0) with the value 3 (and has updated the verification value accordingly. The first device-handling entity may report these start and end values ($s_0^{(1)},s_1^{(1)}$) = (0,3) to an auditor (which may be an automated auditing system). The device 200 is then transferred to (e.g. purchased by) a second device-handling entity, which uses the device 200 just one time and thus reports to an auditor start and end values ($s_0^{(2)},s_1^{(2)}$) = (3,4). The device 200 is finally transferred to (e.g. purchased by) a third device-handling entity, which uses the device 200 two more times and thus reports to an auditor start and end values

$(s_0^{(3)}, s_1^{(3)}) = (4,6)$. The auditor may operate to confirm that $s_1^{(1)} = s_0^{(2)} = 3$ and that $s_1^{(2)} = s_0^{(3)} = 4$, and that these values are consistent with the reported check values and verification values. In the case of FIG. 2A, no irregularities are detected.

FIG. 2B illustrates a case of invalid checkpointing by the second device-handling entity. When the second device-handling entity takes possession of tagged device 202, the tag has a counter value of s=3. The second device-handling entity reports to the auditor that it has an incoming counter value of 3 and an outgoing counter value of 4, which would indicate a single use of the tagged device 202. However, the second device-handling entity intentionally or accidentally fails to increment the counter value s, which remains at a value of 3. For example, the second device-handling entity may wish to sell the device to a third party and to obtain a higher price by understating the number of times the device has been used. However, the third device-handling entity reports a starting counter value of 3, which is less than the end value of 4 reported by the second device-handling entity. The auditor determines that $s_1^{(2)} < s_0^{(3)}$ and thus may report the irregularity. In response to such a determination, and tagged device 202 may be removed from use or other actions may be taken. An auditor can identify the second device-handling entity as having cheated, as $s_0^{(2)} = s_0^{(3)}$, and it is not feasible for the third device-handling entity to decrement the tag counter. (For example, it is not feasible for the third entity to assert receipt of the tag with s=3 when the tag state was s=4.)

Various digital signature algorithms can be employed in embodiments disclosed herein. BLS signatures, described in Boneh et al., "Short Signatures from the Weil Pairing," J. Cryptology 17(4): 297-319 (2004), may be used as they have the advantage of being relatively compact public-key signatures. With, e.g., the use of a pairing-friendly Barreto-Naehrig 254-bit prime order curve (BN-254), which offers roughly 128-bit security, a signature is 254 bits in length. described in P. BN-254 is described in Barreto & M. Naehrig, "Pairing friendly elliptic curves of prime order," in Selected Areas in Cryptography, pp. 319-331, Springer, 2006.

In embodiments that use SHA-256 as hash function and that have a maximum counter value of $2^{25}$ (just over 32,000,000), the storage cost for the tuple $((s, v, ch))$ is less than 35 bytes, well within the storage capacity of even a low-cost RFID tag, such as an EPC tag. (SHA-224 or a hash function with an even smaller image size, e.g., 128 bits, may be sufficient for most settings, and would result in even less memory usage.) Verification of tag state then calls for at most $2^{25}$ hash computations. Use of Intel's AES-NI instruction set to implement a hash function such as Rijndael-256 would then yield a verification speed of less than a second on, e.g., an Intel Core i5 650 (3.20GHz), using techniques described in Bos et al., "Efficient hashing using the AES instruction set," Cryptographic Hardware and Embedded Systems-CHES 2011, Springer Berlin Heidelberg, 2011, pp.

507-522.

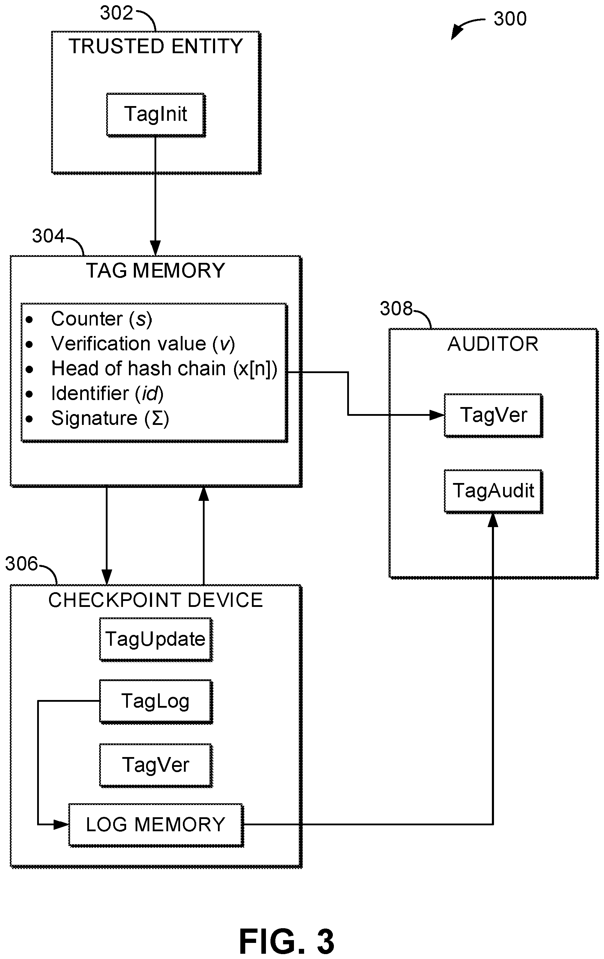

FIG. 3 is a block diagram illustrating the functional architecture of a system 300 for tamper-resistant device usage metering. A trusted entity 302, such as a manufacturer of a device or of RFID tags, is operative to perform the tag initiation function TagInit. A tag memory 304 (which may be, for example, a memory of a standalone RFID tag or a memory in a device being tracked) in an exemplary embodiment stores a counter value $s$, a verification value $v$, a head $x[n]$ of the hash chain, an identifier $id$, and a signature $\Sigma$. In some embodiments, the identifier $id$ is stored in read-only memory. In some embodiments, the values of $x[n]$, $id$, and $\Sigma$ are stored together as a check value $ch$.

A checkpoint device 306, such as an RFID reader, is operative to perform the updating function TagUpdate. The checkpoint device in the illustrated embodiment is further operative to perform the logging function TagLog and to store checkpoint values such as checkpoint value $d = (s, v, ch)$ in a log memory. In some embodiments, the log memory stores only the first checkpoint value obtained from each tag and the most recent checkpoint value obtained from each tag. An exemplary auditor device 308 is operative to perform the TagAudit function using checkpoint values received from one or more checkpoint devices. In some embodiments, the auditor device is further operative to perform the TagVer function to verify data stored in a tag memory.

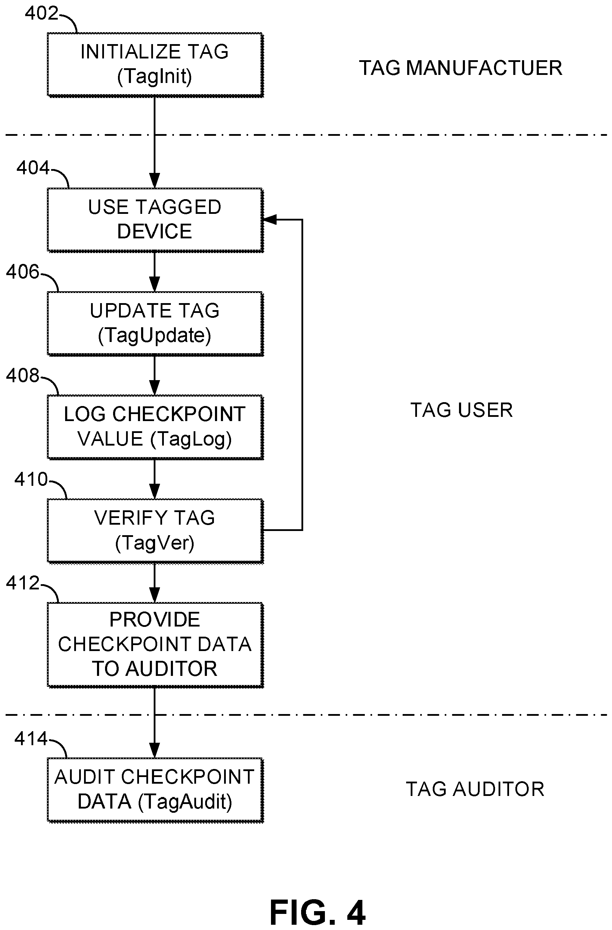

An exemplary method is illustrated in FIG. 4. In step 402, a tag manufacturer initializes a tag using, e.g. a TagInit function. A tag user uses a tagged device (e.g. a medical or aircraft device) in step 404 and updates the tag in step 406 to reflect that use, e.g. by incrementing the counter value s and applying the hash function $h()$ on the verification value $v$ of the tag. The tag may be updated using, for example, the function TagUpdate. In some embodiments, a checkpoint device employed by the tag user may log checkpoint values for the tag in step 408, e.g. using the function TagLog. The checkpoint device may only log the first checkpoint values and the most recent checkpoint values for a particular tag, or the checkpoint device may log checkpoint values each time it encounters a tag. In step 410, the checkpoint device may also verify the validity of the values stored on the tag using, for example, the TagVer function. In some embodiments, the TagVer function is not performed each time the tag is updated: the TagVer function is more computationally intensive than the TagUpdate function, and it may not be desirable to perform such operations on, for example, a handheld RFID reader. The process of using the tagged device and updating the tag (and optionally logging checkpoint values and verifying the tag) may be performed repeatedly.

During or after use of the tagged device by the tag user, the tag user may provide stored checkpoint data to a tag auditor in step 412. The tag auditor may check the validity of checkpoint values in step 414. For example, the tag auditor may collect starting and ending checkpoint values from all checkpoint devices that have interacted with a particular tag, check whether the starting and ending values are consistent and free of gaps, and confirm the validity of the checkpoint values based on the associated verification values v.

In some embodiments, faster performance can be attained at the cost of modestly increased storage overhead by using a plurality of sub-counters instead of a single counter. In some embodiments described above, a single hash is performed every time the counter is incremented by one. In an alternative embodiment, a global counter state may be represented by state in a sequence of sub-counters, each of which records a portion of the full counter state with a different granularity. Updates and verification can in this case be made more computationally efficient at the cost of a small amount of storage.

As an example, sub-counters numbered 1, 2, and 3 may have corresponding states $s_1$, $s_2$, and $s_3$ such that the state of the global counter is defined as $100 s_1 + 10 s_2 + s_3$. Thus, the global counter state may be increased by, e.g., 1254, by incrementing $s_1$ by 10, $s_2$ by 25, and $s_3$ by 4, for a total of 39 counter increments, rather than the 1254 required when the global counter is represented using a single hash chain / counter. This approach also permits the use of shorter hash chains and thus more efficient verification. In some embodiments, a single digital signature may be applied to a hash of the heads of all of the hash chains corresponding to all sub-counters to reduce storage costs.

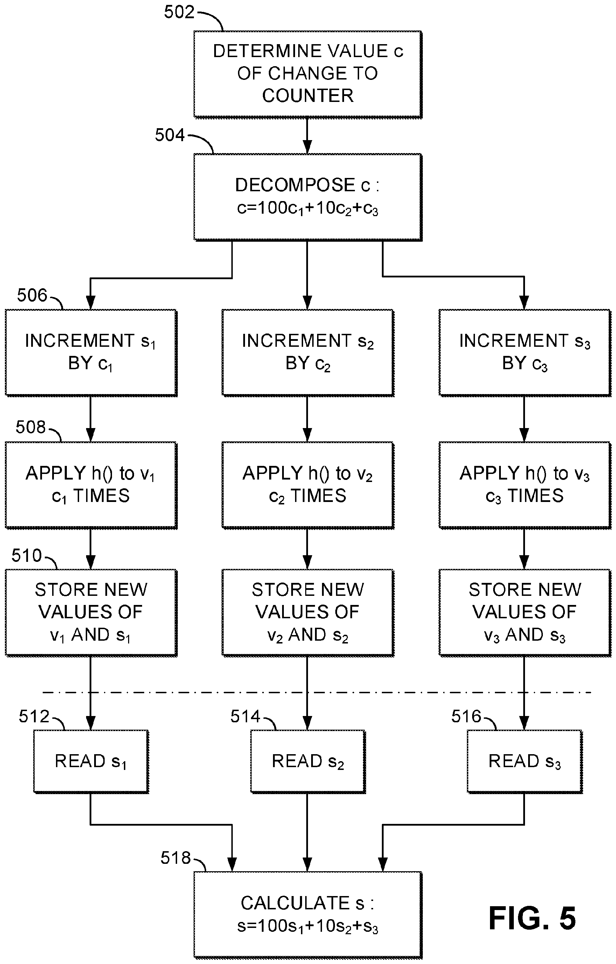

An exemplary method using a plurality of sub-counters is illustrated in FIG. 5. In step 502 of a counter update process, an amount c is determined by which the counter should be updated. For example, c may represent a number of hours or minutes a part or device has been in use since the previous update, or c may represent a number of uses of a part, device, or other product since the previous update (e.g. number of landings or takeoffs). In step 504, the number c is then decomposed into a linear combination of components with different coefficients, each coefficient corresponding to a different sub-counter. For example, in an embodiment using a first coefficient 100, a second coefficient 10, and a third coefficient 1, non-negative integers $c_1$, $c_2$, and $c_3$ may be selected such that $c=100 c_1 + 10 c_2 + c_3$. Different sets of coefficients may be used in different embodiments. It may be noted that the decomposition or a particular value is not necessarily unique. For example, $100 \times 0 + 10 \times 11 + 13$ is the same as $100 \times 1 + 10 \times 2 + 3$. In some embodiments, the decomposition may be selected so as to minimize the number of hash operations required to perform the update, namely a decomposition with a minimum value of $c_1 + c_2 + c_3$. In some embodiments, particularly those using particularly short hash chains (low values of n), it may be desirable to select a decomposition that avoids excessively incrementing any one of the sub-counters.

Each individual counter may store values $s_i$ and $v_i$, e.g. $s_1$, $s_2$, $s_3$, $v_1$, $v_2$, and $v_3$. Once the values of $c_1$, $c_2$, and $c_3$ have been selected, a first sub-counter corresponding to the first coefficient is updated by the value $c_1$. Specifically, the counter value $s_1$ of the first sub-counter is incremented by $c_1$ in step 506, and in step 508, the hash function $h()$ is applied to the verification value $v_1$ of the first sub-counter a total of $c_1$ times. In step 510, new values of $s_1$ and $v_1$ are stored in the sub-counter. Corresponding updates are applied to the other sub-counters.

To read a tag that includes a plurality of sub-counters, the values $s_1$, $s_2$, and $s_3$ are read from the sub-counters in respective steps 512, 514, and 516. In step 518, the values $s_1$, $s_2$, and $s_3$ are then multiplied by the respective corresponding coefficient, and the result is added together to give the final counter value $s$, for example $s = 100 s_1 + 10 s_2 + s_3$.

It may be noted that, due to the one-way nature of the sub-counters, the sub-counters do not "turn over" or carry any value to other counters. Consider again coefficients of 100, 10, and 1, and suppose that $s_1=1$ $s_2=9$ and $s_3=9$, representing the value 199. Incrementing the counter by $c=1$ would result in $s_1=1$ $s_2=9$ and $s_3=10$ to represent the value 200. The individual sub-counters cannot be decremented, so incrementing the counter does not result in, for example, $s_1=2$ $s_2=0$ and $s_3=0$.

The counter information for different sub-counters may be stored in the same memory, for example in the same RFID tag. In some embodiments, the coefficients associated with each of the sub-counters may be stored in the tag memory, stored for example in read-only memory or stored as digitally signed values.

A verification process as described above for single counters may be performed on each of the sub-counters. For example, the hash function $h()$ may be applied repeatedly to each of the sub-counter verification values $v_i$ to confirm that, after an appropriate number of applications, the head $x_i[n_i]$ of the hash chain is reached. The value $n_i$ may be the same for each of the sub-counters, or it may be different for different sub-counters. In some embodiments, different signature values $\Sigma_i$ are used for verification of different sub-counters. In other embodiments, a single signature value $\Sigma$ is used for all sub-counters. For example, a single signature value $\Sigma$ used by all sub-counters may be generated as follows.

$$\Sigma = \mathrm{Sig}_{sk}(x_1[n_1], \, x_2[n_2], \, x_3[n_3], \, id)$$

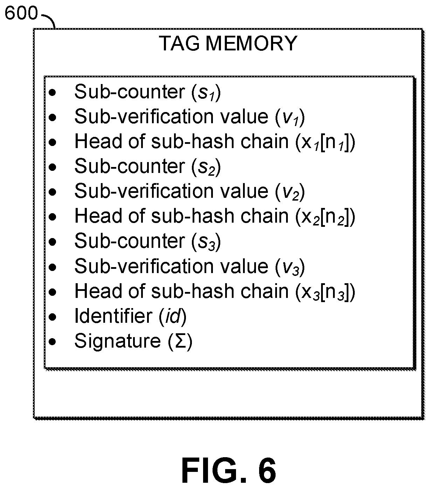

An example of the contents of a tag memory 600 that includes three sub-counters is illustrated in FIG. 6. The tag memory 600 of FIG. 6 (or that of FIG. 3) may be, for example an EEPROM (electrically erasable programmable read-only memory) of an NFC or RFID (or dual NFC/RFID) chip or other wired or wireless memory device. The tag memory 600 stores the following values:

- Sub-counter ($s_1$)
- Sub-verification value ($v_1$)
- Head of sub-hash chain ($x_1[n_1]$)

- Sub-counter ($s_2$)
- Sub-verification value ($v_2$)
- Head of sub-hash chain ($x_2[n_2]$)
- Sub-counter ($s_3$)
- Sub-verification value ($v_3$)
- Head of sub-hash chain ($x_3[n_3]$)
- Identifier *(id)*
- Signature ($\Sigma$)

In alternative embodiments, a tag memory may store different combinations of values.

In an alternative embodiment, tag state data (e.g. the counter value *s,* the verification value *v,* and the check value *ch*) are stored in a database administered by a trustworthy entity, e.g., a device manufacturer.

In an exemplary embodiment, at the time of production or deployment of a given device (e.g., a medical device), the device manufacturer or other trusted entity uses TagInit to set initial values of *s, v,* and *ch*. Specifically, on initialization, $x[0]$ is selected as a k-*bit* random number generated using r $\{0,1\}^k$ . The head $x[n]$ of the hash chain is generated using $x[n] = h^{(n)}(x[0])$, where *n* is a predetermined integer that determines the length of the hash chain. The value *id* is a unique identifier (e.g. a serial number of the device or a manufacturer-assigned tag identifier TID of an RFID tag), and a digital signature $\Sigma = \text{Sig}_{sk}(x[n], id)$ is generated using a private key *sk* associated with the device or with, e.g., the manufacturer of the device. A check value *ch* is generated, where *ch* includes the values $x[n]$, *id,* and $\Sigma$. In the device memory, the counter value *s* is set to zero, the verification value *v* is set to x[0], and the check value *ch* is stored. In some embodiments, the identifier *id* is stored in read-only memory.

In an exemplary embodiment, a checkpoint device is operative to perform the TagVer, TagUpdate, and TagLog functions described above. For example, the checkpoint device may include a processor and a non-transitory computer storage medium storing instructions operative, when executed by the processor, to perform the TagVer, TagUpdate, and TagLog functions. For use in the TagVer, the public key *pk* associated with the device being monitored (and/or associated with the manufacturer of that device) may be stored in a memory of the checkpoint device using any of a number of means: preinstallation, software update, manual installation, and the like. The checkpoint device may store and recognize multiple public keys should there be multiple authorities, e.g., multiple device manufacturers, present in a given environment.

In some embodiments, the user interface for the checkpoint device displays the current state (e.g. current counter value) of a target device. The user interface may also display a warning should verification via TagVer fail. The reader enables a user (e.g., medical personnel or aircraft maintenance personnel) to update the state of the tag by increasing its counter value. To determine the amount of the increase, the checkpoint device might accept manual input or in, e.g., the case of an aircraft part, might make use of flight records or schedules loaded into the checkpoint device.

The checkpoint device is further operative in some embodiments to record checkpoint values. The checkpoint device may convey the checkpoint values during periodic connection with the internet, on a USB device, and the like. These checkpoint values can then be aggregated on behalf of an entity in a supply / device-use chain, e.g., an airport in the case of aircraft parts, to be forwarded to an auditor. The auditor may then apply the TagAudit function over the checkpoint values accumulated across the lifetime of a given tag to monitor for failure by handling entities to make appropriate updates.

Counter systems and methods as described herein may be employed in a variety of different settings. Consider, for example, a medical device, such as an endoscope, or an aircraft part, such as a brake disk or O-ring. The safety of patients / passengers requires that the service lifetime of the device (e.g. number of uses or hours of use) be faithfully recorded; in this way, the device can be serviced or removed from service when a prescribed limit of use is reached. Given the limited resources of low-cost devices operating in austere environments, embodiments disclosed herein record the device lifecycle state using the (non-volatile) memory in an attached or embedded RFID tag, such as an EPC (Electronic Product Code) tag. An external RFID reader or other checkpoint device may then modify the recorded state of use by means of a program specifically for this purpose. For example, during aircraft maintenance following a flight, maintenance personnel may scan tags. During the scanning, the checkpoint device may then update the counter values for aircraft devices according to wear (e.g., number of takeoffs and landings, or hours of flight) incurred during the flight. In some use cases, chemical reagents (e.g. used for cleaning and sterilizing) may be reusable a certain limited number of times, and a tag with a secure counter may be affixed to (or incorporated in) a container for the reagent.

The ability to modify tag memory, however, is accompanied by an ability to modify state incorrectly. Using a rogue RFID reader or a reader with rogue software / firmware, it would be possible, for example, for an unscrupulous handler to mount a lifecycle-extension attack in order to pass an inspection / audit, resell a used part, etc. Exemplary systems and methods described herein may be employed to assist in reducing the likelihood that a rogue RFID reader or a reader with rogue software / firmware can mount a lifecycle-extension attack in order to pass an inspection / audit, resell a used part, etc. Some embodiments of systems and methods disclosed herein can help to prevent such tampering without necessarily requiring modification of existing RFID tags or other non-volatile device memory components.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Exemplary embodiments disclosed herein are implemented using one or more wired and/or wireless network nodes, such as a wireless transmit/receive unit (WTRU) or other network entity.

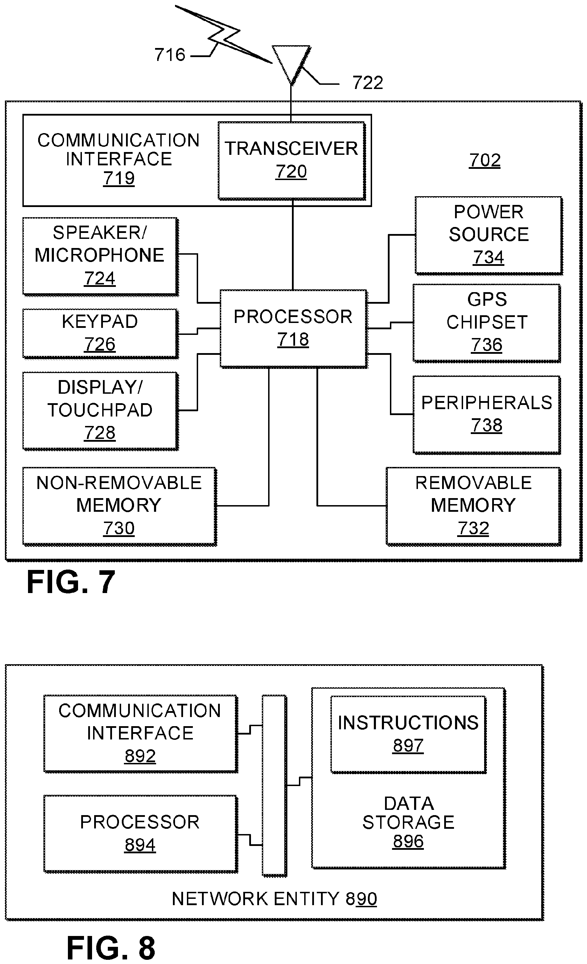

FIG. 7 is a system diagram of an exemplary WTRU 702, which may be employed as, for example, a tag device or a checkpoint device in embodiments described herein. As shown in FIG. 7, the WTRU 702 may include a processor 718, a communication interface 719 including a transceiver 720, a transmit/receive element 722, a speaker/microphone 724, a keypad 726, a display/touchpad 728, a non-removable memory 730, a removable memory 732, a power source 734, a global positioning system (GPS) chipset 736, and sensors 738. It will be appreciated that the WTRU 702 may include any sub-combination of the foregoing elements while remaining consistent with an embodiment.

The processor 718 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 718 may perform signal coding, data processing, power control, input/output processing, and/or any other functionality that enables the WTRU 702 to operate in a wireless environment. The processor 718 may be coupled to the transceiver 720, which may be coupled to the transmit/receive element 722. While FIG. 7 depicts the processor 718 and the transceiver 720 as separate components, it will be appreciated that the processor 718 and the transceiver 720 may be integrated together in an electronic package or chip.

The transmit/receive element 722 may be configured to transmit signals to, or receive signals from, a base station over the air interface 716. For example, in one embodiment, the transmit/receive element 722 may be an antenna configured to transmit and/or receive RF signals. In another embodiment, the transmit/receive element 722 may be an emitter/detector configured to transmit and/or receive IR, UV, or visible light signals, as examples. In yet another embodiment, the transmit/receive element 722 may be configured to transmit and receive both RF and light signals. It will be appreciated that the transmit/receive element 722 may be configured to transmit and/or receive any combination of wireless signals.

In addition, although the transmit/receive element 722 is depicted in FIG. 7 as a single element, the WTRU 702 may include any number of transmit/receive elements 722. More specifically, the WTRU 702 may employ MIMO technology. Thus, in one embodiment, the WTRU 702 may include two or more transmit/receive elements 722 (e.g., multiple antennas) for transmitting and receiving wireless signals over the air interface 716.

The transceiver 720 may be configured to modulate the signals that are to be transmitted by the transmit/receive element 722 and to demodulate the signals that are received by the transmit/receive element 722. As noted above, the WTRU 702 may have multi-mode capabilities. Thus, the transceiver 720 may include multiple transceivers for enabling the WTRU 702 to communicate via multiple RATs, such as UTRA and IEEE 802.11, as examples. The transceiver 720 may be a transceiver operative to communicate using near-field communication (NFC) and/or radio-frequency identification (RFID) techniques.

The processor 718 of the WTRU 702 may be coupled to, and may receive user input data from, the speaker/microphone 724, the keypad 726, and/or the display/touchpad 728 (e.g., a liquid crystal display (LCD) display unit or organic light-emitting diode (OLED) display unit). The processor 718 may also output user data to the speaker/microphone 724, the keypad 726, and/or the display/touchpad 728. In addition, the processor 718 may access information from, and store data in, any type of suitable memory, such as the non-removable memory 730 and/or the removable memory 732. The non-removable memory 730 may include random-access memory (RAM), read-only memory (ROM), a hard disk, or any other type of memory storage device. The removable memory 732 may include a subscriber identity module (SIM) card, a memory stick, a secure digital (SD) memory card, and the like. In other embodiments, the processor 718 may access information from, and store data in, memory that is not physically located on the WTRU 702, such as on a server or a home computer (not shown).

The processor 718 may receive power from the power source 734, and may be configured to distribute and/or control the power to the other components in the WTRU 702. The power source 734 may be any suitable device for powering the WTRU 702. As examples, the power source 734 may include one or more dry cell batteries (e.g., nickel-cadmium (NiCd), nickel-zinc (NiZn), nickel metal hydride (NiMH), lithium-ion (Li-ion), and the like), solar cells, fuel cells, and the like.

The processor 718 may also be coupled to the GPS chipset 736, which may be configured to provide location information (e.g., longitude and latitude) regarding the current location of the WTRU 702. In addition to, or in lieu of, the information from the GPS chipset 736, the WTRU 702 may receive location information over the air interface 716 from a base station and/or determine its location based on the timing of the signals being received from two or more nearby base stations. It will be appreciated that the WTRU 702 may acquire location information by way of any suitable location-determination method while remaining consistent with an embodiment.

The processor 718 may further be coupled to other peripherals 738, which may include one or more software and/or hardware modules that provide additional features, functionality and/or wired or wireless connectivity. For example, the peripherals 738 may include sensors such as an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

FIG. 8 depicts an exemplary network entity 890 that may be used in embodiments of the present disclosure, for example as a trusted entity or auditor. As depicted in FIG. 8, network entity 890 includes a communication interface 892, a processor 894, and non-transitory data storage 896, all of which are communicatively linked by a bus, network, or other communication path 898.

Communication interface 892 may include one or more wired communication interfaces and/or one or more wireless-communication interfaces. With respect to wired communication, communication interface 892 may include one or more interfaces such as Ethernet interfaces, as an example. With respect to wireless communication, communication interface 892 may include components such as one or more antennae, one or more transceivers/chipsets designed and configured for one or more types of wireless (e.g., LTE) communication, and/or any other components deemed suitable by those of skill in the relevant art. And further with respect to wireless communication, communication interface 892 may be equipped at a scale and with a configuration appropriate for acting on the network side-as opposed to the client side-of wireless communications (e.g., LTE communications, Wi-Fi communications, and the like). Thus, communication interface 892 may include the appropriate equipment and circuitry (perhaps including multiple transceivers) for serving multiple mobile stations, UEs, or other access terminals in a coverage area.

Processor 894 may include one or more processors of any type deemed suitable by those of skill in the relevant art, some examples including a general-purpose microprocessor and a dedicated DSP.

Data storage 896 may take the form of any non-transitory computer-readable medium or combination of such media, some examples including flash memory, read-only memory (ROM), and random-access memory (RAM) to name but a few, as any one or more types of non-transitory data storage deemed suitable by those of skill in the relevant art could be used. As depicted in FIG. 8, data storage 896 contains program instructions 897 executable by processor 894 for carrying out various combinations of the various network-entity functions described herein.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A method, performed by a wireless RFID tag reader, of incrementing a counter in an RFID tag memory associated with a limited-use product by a value, $c$, the method comprising:

    wirelessly reading an initial counter value, $s$, and an initial verification value, $v$, from the RFID tag memory;
    applying a hash function, $h$, to the initial verification value $c$ times to obtain a hashed verification value, $v'=h^{(c)}(v)$;
    incrementing the initial counter value, $s$, by the value $c$ to obtain an incremented counter value, $s'=s+c$; and
    in response to at least one use of the limited-use product, wirelessly replacing the initial verification value, $v$, with the hashed verification value, $v'$, and the initial counter value, $s$, with the incremented counter value, $s'$, in the RFID tag memory.

2. The method of claim 1, further comprising:

    reading a hash chain head value, $x[n]$, from the tag memory;
    repeatedly applying the hash function, $h$, to the initial verification value to obtain a repeatedly-

hashed verification value, $\tilde{x}[n] = h^{(n-s)}(v)$, where $n$ is a predetermined positive integer; and comparing the repeatedly-hashed verification value, $\tilde{x}[n]$, to the hash chain head value, $x[n]$, to validate the initial verification value.

3. The method of claim 2, further comprising issuing an alert in response to a determination that the initial verification value is not valid.

4. The method of claim 2, further comprising:

reading a device identifier, $id$, from the tag memory;
reading a digital signature, $\Sigma$, from the tag memory;
validating the hash chain head value by verifying that the digital signature, $\Sigma$, is a valid signature on ($\tilde{x}[n]$, $id$).

5. The method of claim 4, further comprising issuing an alert in response to a determination that the hash chain head value is not valid.

6. The method of any of claims 1-5, wherein the limited-use product is a medical device.

7. The method of any of claims 1-5, wherein the limited-use product is an aircraft component.

8. The method of any of claims 1-7, wherein the hash function is SHA-256.

9. A wireless RFID tag reader apparatus for updating a counter by a value, $c$, the apparatus comprising:

a tag interface operative to wirelessly read an initial counter value, $s$, and an initial verification value, $v$, from an RFID tag memory;
logic for applying a hash function, $h$, to the initial verification value $c$ times to obtain a hashed verification value, $v'=h^{(c)}(v)$) and
logic for incrementing the initial counter value, $s$, by the value $c$ to obtain an incremented counter value, $s'=s+c$;
the tag interface further being operative to wirelessly replace the initial verification value, $v$, with the hashed verification value, $v'$, and the initial counter value, $s$, with the incremented counter value, $s'$, in the tag memory.

**Patentansprüche**

1. Verfahren, das durch einen drahtlosen RFID-Markierungsleser durchgeführt wird, um einen Zähler in einem RFID-Markierungsspeicher, der mit einem Produkt eingeschränkter Verwendung zusammenhängt, um einen Wert $c$ zu inkrementieren, wobei das Verfahren umfasst:

einen anfänglichen Zählerwert $s$ und einen anfänglichen Verifizierungswert $v$ drahtlos aus dem RFID-Markierungsspeicher auszulesen;
eine Hash-Funktion $h$ $c$-malig auf den anfänglichen Verifizierungswert anzuwenden, um einen einer Hash-Verarbeitung unterzogenen Verifizierungswert $v'=h^{(c)}(v)$ zu erhalten;
den anfänglichen Zählerwert $s$ um den Wert $c$ zu inkrementieren, um einen inkrementierten Zählerwert $s'=s+c$ zu erhalten; und
im Ansprechen auf mindestens einen Gebrauch des Produkts eingeschränkter Verwendung, im RFID-Markierungsspeicher drahtlos den anfänglichen Verifizierungswert $v$ durch den einer Hash-Verarbeitung unterzogenen Verifizierungswert $v'$ und den anfänglichen Zählerwert $s$ durch den inkrementierten Zählerwert $s'$ zu ersetzen.

2. Verfahren nach Anspruch 1, darüber hinaus umfassend:

einen Hash-Kettenkopfwert $x[n]$ aus dem Markierungsspeicher auszulesen;
die Hash-Funktion $h$ wiederholt auf den anfänglichen Verifizierungswert anzuwenden, um einen wiederholt einer Hash-Verarbeitung unterzogenen Verifizierungswert $\tilde{x}[n] = h^{(n-s)}(v)$ zu erhalten, wobei $n$ eine vorbestimmte positive ganze Zahl ist; und
den wiederholt einer Hash-Verarbeitung unterzogenen Verifizierungswert $\tilde{x}[n]$ mit dem Hash-Kettenkopfwert $x[n]$ zu vergleichen, um den anfänglichen Verifizierungswert zu validieren.

3. Verfahren nach Anspruch 2, darüber hinaus umfassend, eine Warnung im Ansprechen auf eine Bestimmung auszugeben, dass der anfängliche Verifizierungswert nicht zulässig ist.

4. Verfahren nach Anspruch 2, darüber hinaus umfassend:

eine Gerätekennung $id$ aus dem Markierungsspeicher auszulesen;
eine digitale Signatur $\Sigma$ aus dem Markierungsspeicher auszulesen;
den Hash-Kettenkopfwert zu validieren, indem anhand ($\tilde{x}[n]$, $id$) verifiziert wird, dass die digitale Signatur $\Sigma$ eine zulässige Signatur ist.

5. Verfahren nach Anspruch 4, darüber hinaus umfassend, eine Warnung im Ansprechen auf eine Bestimmung abzugeben, dass der Hash-Kettenkopfwert nicht zulässig ist.

**6.** Verfahren nach einem der Ansprüche 1 bis 5, wobei es sich bei dem Produkt eingeschränkter Verwendung um ein medizinisches Gerät handelt.

**7.** Verfahren nach einem der Ansprüche 1 bis 5, wobei es sich bei dem Produkt eingeschränkter Verwendung um ein Flugzeugbauteil handelt.

**8.** Verfahren nach einem der Ansprüche 1 bis 7, wobei es sich bei Hash-Funktion um SHA-256 handelt.

**9.** Drahtlose RFID-Markierungsleservorrichtung zum Aktualisieren eines Zählers um einen Wert $c$, wobei die Vorrichtung umfasst:

eine Markierungsschnittstelle, die funktionsfähig ist, drahtlos einen anfänglichen Zählerwert $s$ und einen anfänglichen Verifizierungswert $v$ aus einem RFID-Markierungsspeicher auszulesen;
eine Logik, um eine Hash-Funktion $h$ auf den anfänglichen Verifizierungswert $c$-malig anzuwenden, um einen einer Hash-Verarbeitung unterzogenen Verifizierungswert $v'=h^{(c)}(v)$ zu erhalten; und
eine Logik, um den anfänglichen Zählerwert $s$ um den Wert $c$ zu inkrementieren, um einen inkrementierten Zählerwert $s'=s+c$ zu erhalten;
wobei die Markierungsschnittstelle darüber hinaus funktionsfähig ist, im Markierungsspeicher den anfänglichen Verifizierungswert $v$ durch den einer Hash-Verarbeitung unterzogenen Verifizierungswert $v'$ und den anfänglichen Zählerwert $s$ durch den inkrementierten Zählerwert $s'$ drahtlos zu ersetzen

## Revendications

**1.** Procédé, effectué par un lecteur d'étiquette RFID sans fil, consistant à incrémenter un compteur dans une mémoire d'étiquette RFID associée à un produit à utilisation limitée à raison d'une valeur $c$, le procédé comprenant :

la lecture sans fil d'une valeur de compteur initiale $s$, et d'une valeur de vérification initiale $v$, à partir de la mémoire d'étiquette RFID ;
l'application d'une fonction de hachage $h$ à la valeur de vérification initiale $c$ fois pour obtenir une valeur de vérification hachée $v'=h^{(C)}(v)$;
l'incrémentation de la valeur de compteur initiale $s$ à raison de la valeur $c$ pour obtenir une valeur de compteur incrémentée $s'=s+c$; et
en réponse à au moins une utilisation du produit à utilisation limitée, le remplacement sans fil de la valeur de vérification initiale $v$ par la valeur de vérification hachée $v'$ et de la valeur de compteur initiale $s$ par la valeur de compteur incrémentée $s'$ dans la mémoire d'étiquette RFID.

**2.** Le procédé de la revendication 1, comprenant en outre :

la lecture d'une valeur de tête de chaîne de hachage $x[n]$ à partir de la mémoire d'étiquette ;
l'application répétée de la fonction de hachage $h$ à la valeur de vérification initiale pour obtenir une valeur de vérification hachée de manière répétée $\tilde{x}[n] = h^{(n-s)}(v)$, où $n$ est un entier positif prédéterminé ; et
la comparaison de la valeur de vérification hachée de manière répétée, $x[n]$ , à la valeur de tête de chaîne de hachage $x[n]$, pour valider la valeur de vérification initiale.

**3.** Le procédé de la revendication 2, comprenant en outre l'émission d'une alerte en réponse à une détermination que la valeur de vérification initiale n'est pas valide.

**4.** Le procédé de la revendication 2, comprenant en outre :

la lecture d'un identifiant de dispositif $id$ à partir de la mémoire d'étiquette ;
la lecture d'une signature numérique $\Sigma$ à partir de la mémoire d'étiquette ;
la validation de la valeur de tête de chaîne de hachage en vérifiant sur $(\tilde{x}[n],id)$ que la signature numérique $\Sigma$ est une signature valide.

**5.** Le procédé de la revendication 4, comprenant en outre l'émission d'une alerte en réponse à une détermination que la valeur de tête de chaîne de hachage n'est pas valide.

**6.** Le procédé de l'une quelconque des revendications 1 à 5, sachant que le produit à utilisation limitée est un dispositif médical.

**7.** Le procédé de l'une quelconque des revendications 1 à 5, sachant que le produit à utilisation limitée est un composant d'aéronef.

**8.** Le procédé de l'une quelconque des revendications 1 à 7, sachant que la fonction de hachage est SHA-256.

**9.** Appareil lecteur d'étiquette RFID sans fil destiné à mettre à jour un compteur à raison d'une valeur $c$, l'appareil comprenant :

une interface d'étiquette opérationnelle pour lire sans fil une valeur de compteur initiale *s* et une valeur de vérification initiale *v* à partir d'une mémoire d'étiquette RFID ;

une logique destinée à appliquer une fonction de hachage *h* à la valeur de vérification initiale *c* fois pour obtenir une valeur de vérification hachée $v'=h^{(C)}(v)$; et

une logique destinée à incrémenter la valeur de compteur initiale *s* à raison de la valeur *c* pour obtenir une valeur de compteur incrémentée $s'=s+c;$

l'interface d'étiquette étant en outre opérationnelle pour remplacer sans fil la valeur de vérification initiale *v* par la valeur de vérification hachée *v'* et la valeur de compteur initiale *s* par la valeur de vérification incrémentée *s'* dans la mémoire d'étiquette.

**FIG. 1**

200

$( s_0^{(1)} , s_1^{(1)} )$
$= ( 0 , 3 )$

$s \leftarrow s + 3$

$s = 0$    $s = 3$

FIRST DEVICE-
HANDLING ENTITY

$( s_0^{(2)} , s_1^{(2)} )$
$= ( 3 , 4 )$

$s \leftarrow s + 1$

$s = 3$    $s = 4$

SECOND DEVICE-
HANDLING ENTITY

$( s_0^{(3)} , s_1^{(3)} )$
$= ( 4 , 6 )$

$s \leftarrow s + 2$

$s = 4$    $s = 6$

THIRD DEVICE-
HANDLING ENTITY

# FIG. 2A

DECEPTIVE
REPORT
$( s_0^{(2)} , s_1^{(2)} )$
$= ( 3 , 4 )$

202

$( s_0^{(1)} , s_1^{(1)} )$
$= ( 0 , 3 )$

$s \leftarrow s + 3$

$s = 0$    $s = 3$

FIRST DEVICE-
HANDLING ENTITY

$s \leftarrow s + 0$

$s = 3$    $s = 3$

SECOND DEVICE-
HANDLING ENTITY

$( s_0^{(3)} , s_1^{(3)} )$
$= ( 3 , 5 )$

$s \leftarrow s + 2$

$s = 3$    $s = 6$

THIRD DEVICE-
HANDLING ENTITY

# FIG. 2B

300

302

# TRUSTED ENTITY

TagInit

304

## TAG MEMORY

- Counter (*s*)
- Verification value (*v*)
- Head of hash chain (x[n])
- Identifier (*id*)
- Signature (Σ)

308

## AUDITOR

TagVer

TagAudit

306

## CHECKPOINT DEVICE

TagUpdate

TagLog

TagVer

LOG MEMORY

# FIG. 3

402 — INITIALIZE TAG
(TagInit)

TAG MANUFACTUER

404 — USE TAGGED
DEVICE

406 — UPDATE TAG
(TagUpdate)

TAG USER

408 — LOG CHECKPOINT
VALUE (TagLog)

410 — VERIFY TAG
(TagVer)

412 — PROVIDE
CHECKPOINT DATA
TO AUDITOR

414 — AUDIT CHECKPOINT
DATA (TagAudit)

TAG AUDITOR

## FIG. 4

**FIG. 5**

502 — DETERMINE VALUE $c$ OF CHANGE TO COUNTER

504 — DECOMPOSE $c$ : $c = 100c_1 + 10c_2 + c_3$

506 — INCREMENT $s_1$ BY $c_1$

INCREMENT $s_2$ BY $c_2$

INCREMENT $s_3$ BY $c_3$

508 — APPLY $h()$ to $v_1$ $c_1$ TIMES

APPLY $h()$ to $v_2$ $c_2$ TIMES

APPLY $h()$ to $v_3$ $c_3$ TIMES

510 — STORE NEW VALUES OF $v_1$ AND $s_1$

STORE NEW VALUES OF $v_2$ AND $s_2$

STORE NEW VALUES OF $v_3$ AND $s_3$

512 — READ $s_1$

514 — READ $s_2$

516 — READ $s_3$

518 — CALCULATE $s$ : $s = 100s_1 + 10s_2 + s_3$

600

| TAG MEMORY |
| --- |

- Sub-counter ($s_1$)
- Sub-verification value ($v_1$)
- Head of sub-hash chain ($x_1[n_1]$)
- Sub-counter ($s_2$)
- Sub-verification value ($v_2$)
- Head of sub-hash chain ($x_2[n_2]$)
- Sub-counter ($s_3$)
- Sub-verification value ($v_3$)
- Head of sub-hash chain ($x_3[n_3]$)
- Identifier (*id*)
- Signature ($\Sigma$)

## FIG. 6

716

722

COMMUNICATION
INTERFACE
719

TRANSCEIVER
720

702

SPEAKER/
MICROPHONE
724

POWER
SOURCE
734

KEYPAD
726

PROCESSOR
718

GPS
CHIPSET
736

DISPLAY/
TOUCHPAD
728

PERIPHERALS
738

NON-REMOVABLE
MEMORY
730

REMOVABLE
MEMORY
732

**FIG. 7**

COMMUNICATION
INTERFACE
892

INSTRUCTIONS
897

PROCESSOR
894

DATA
STORAGE
896

NETWORK ENTITY 890

**FIG. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62262122

### Non-patent literature cited in the description

- **LAMPORT.** Password Authentication with Insecure Communication. *Communications of the ACM,* 1981, vol. 24 (11), 770-772
- **N. HALLER.** The S/KEY one-time password system. *RFC,* 1995, vol. 1760
- **OHKUBO et al.** Cryptographic approach to 'privacy-friendly' tags. *RFID privacy workshop,* 2003, vol. 82
- A survey of RFID authentication protocols based on hash-chain method. **SYAMSUDDIN et al.** Convergence and Hybrid Information Technology, 2008, ICCIT '08. Third International Conference. IEEE, vol. 2, 559-564
- **SCHNEIER, B. ; KELSEY, J.** Secure audit logs to support computer forensics. *ACM Transactions on Information and System Security (TISSEC),* 1999, vol. 2 (2), 159-176
- **ITKIS, G.** *Forward security, adaptive cryptography: Time evolution.,* 2004
- **ZAPATA, M. G. ; ASOKAN, N.** Securing ad hoc routing protocols. *Proceedings of the 1st ACM workshop on Wireless security,* September 2002, 1-10
- **VON MULERT et al.** Security threats and solutions in MANETs: A case study using AODV and SAODV. *Journal of network and computer applications,* 2012, vol. 35 (4), 1249-1259
- **BONEH et al.** Short Signatures from the Weil Pairing. *J. Cryptology,* 2004, vol. 17 (4), 297-319
- Pairing friendly elliptic curves of prime order. **BARRETO ; M. NAEHRIG.** Selected Areas in Cryptography. Springer, 2006, 319-331
- Efficient hashing using the AES instruction set. **BOS et al.** Cryptographic Hardware and Embedded Systems-CHES. Springer, 2011, 507-522